# EUROPÄISCHE PATENTSCHRIFT

(11) **EP 1 657 140 B1**
(45) Veröffentlichungstag und Bekanntmachung des Hinweises auf die Patenterteilung: **20.01.2010**
(21) Anmeldenummer: 05024840.0
(22) Anmeldetag: 14.11.2005
(51) Int. Cl.: B62D 7/15, B62D 1/02

(54) **Lenksystem für ein Fahrzeug**
Steering system for a vehicle
Système de direction pour un véhicule

(30) Priorität: 16.11.2004 DE 102004055282
(43) Veröffentlichungstag der Anmeldung: 17.05.2006
(73) Patentinhaber: Mobil Elektronik GmbH, 74243 Langenbeutingen (DE); GLAMA Maschinenbau GmbH, 45964 Gladbeck (DE)
(72) Erfinder: Klugesherz, Klaus, 74626 Bretzfeld (DE); Schwarz, Reinhard, 45966 Gladbeck (DE)
(74) Vertreter: Laufhütte, Dieter

(56) Entgegenhaltungen:
- EP-A- 1 316 490
- DE-U1- 20 107 719
- NL-C2- 1 015 678
- US-A- 3 198 541
- US-A1- 2002 074 181
- US-A1- 2002 170 764

## Beschreibung

Die Erfindung betrifft ein Lenksystem für Fahrzeuge mit mindestens drei unabhängig voneinander lenkbaren Rädern und einem die Räder mittels eines wählbaren Lenkprogramms lenkenden Lenksollwertgebers, beispielsweise ein Lenkrad.

Es sind bereits flexible Lenksysteme für radgebundene Fahrzeuge in großer Vielfalt bekannt.

Während übliche PKWs und LKWs in der Regel eine Vorderachslenkung und starre Hinterräder aufweisen sind, ist aus EP 1 316 490 A1 ein PKW mit vier unabhängig lenkbaren Rädern bekannt, wobei ein Lenkrad zur Ansteuerung der Räder für eine Kurvenfahrt vorgesehen ist. Die Lenkungssteuerung wählt dabei zur Ausrichtung der Räder automatisch einen dem Fahrzustand angepassten Lenkpol. Weiterhin weist der PKW ein Bedienelement auf, über welches die Räder so angesteuert werden können, dass der PKW eine Diagonalfahrt ausführt, bei dem der PKW seine seitliche Lage verändert, nicht aber seine Ausrichtung.

Für besondere Anwendungen sind weiterhin Spezialfahrzeuge bekannt, die eine sehr hohe Manövrierfähigkeit dadurch erreichen, dass Lenksysteme mit unterschiedlichen fest definierten Lenkprogrammen ausgewählt werden können. Derartige Sonderfahrzeuge, die besonders gut manövrierbar sein müssen, sind beispielsweise Arbeitsmaschinen, wie sie beispielsweise in der Aluminium- oder Stahlindustrie eingesetzt werden, oder Flurförderfahrzeuge zum innerbetrieblichen Transport. Hier kann es sich beispielsweise um Tiegel-Chargierfahrzeuge, Mulden-Chargiermaschinen, Schöpffahrzeuge, Krustenbrecher, Annoden-Transportfahrzeuge, 4-Wege-Stapler, Werkzeugwechselwagen, Fahrzeuge im Containerhandling, Flugfeldfahrzeuge und beliebige andere Sonderfahrzeuge handeln. Bei derartigen Sonderfahrzeugen soll eine möglichst einfache und flexible Lenkbarkeit in der Fabrik und auf dem Betriebsgelände ermöglicht werden. Hier, aber auch bei beliebigen anderen Fahrzeugen, beispielsweise Transportfahrzeugen, Baufahrzeugen und anderen radbetriebenen Spezialmaschinen wird zum Erreichen einer hohen Manövrierfähigkeit die Wahlmöglichkeit zwischen definierten Lenkprogrammen gegeben.

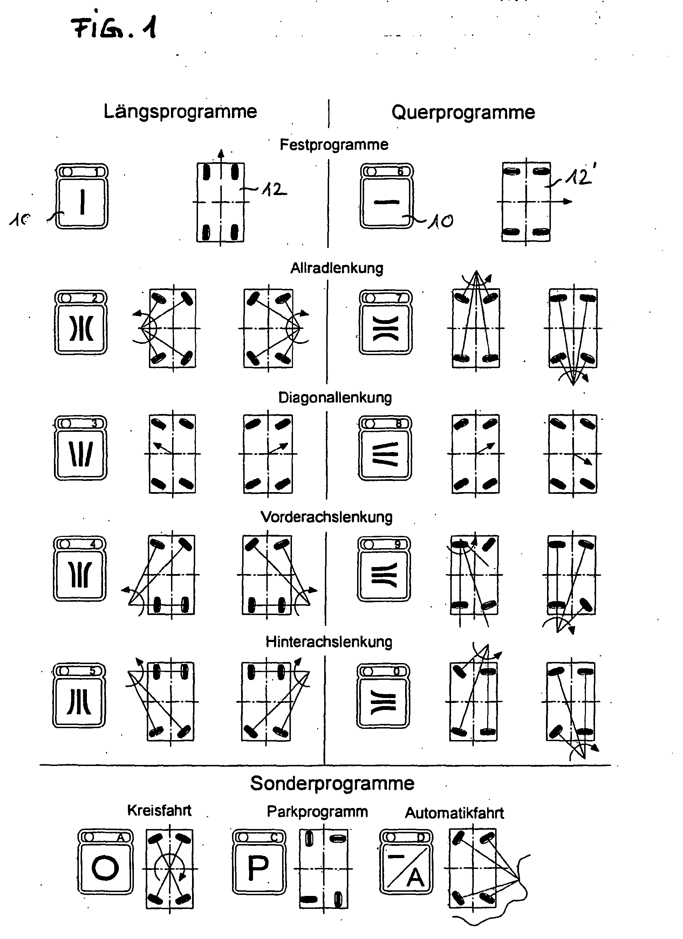

Ein Beispiel für die Wahlmöglichkeit derartiger Lenkprogramme in einem Spezialfahrzeug ist in der Figur 1 gezeigt. In der Figur 1 sind Lenkprogramme schematisch und anhand von Darstellungen 12 dargestellt, wobei hier die jeweiligen Radstellungen gezeigt sind. Mit 10 sind jeweils Tastenfelder eines Bedienterminals bezeichnet, mittels denen der Fahrer die jeweiligen Lenkprogramme anwählen kann. Entsprechend der Wahl des gewählten Lenkprogramms referenzieren sich die gelenkten Achsen des Fahrzeuges auf die Neutralstellung des neu gewählten Lenkprogramms. Danach kann das Fahrzeug mit dem eingesetzten Lenksollwertgeber, beispielsweise einem Lenkrad, entsprechend dem aktiven Lenkprogramm gelenkt werden. In der Figur 1 sind links die sogenannten Längsprogramme und rechts die Querprogramme gezeigt. Das heißt beim Längsprogramm sind sämtliche Räder geradeaus gestellt, wobei die gerade Ausrichtung hier durch eine Pfeilrichtung in der Darstellung 12 dargestellt ist. Im Querprogramm sind die Räder um 90° verdreht, so daß das Fahrzeug quer zur Längsachse in Pfeilrichtung gemäß der Darstellung 12' in Figur 1 fährt. Neben diesem Festprogramm kann eine Allradlenkung ausgehend vom Längsprogramm oder aber vom Querprogramm eingestellt werden. Eine weitere Alternative bietet die Diagonallenkung oder die hier ebenfalls dargestellte Vorderachslenkung bzw. Hinterachslenkung. Zusätzlich können nach dem Stand der Technik Sonderprogramme, wie ein Kreis-, ein Parkprogramm oder eine Automatikfahrt ausgewählt werden.

Bei einem Fahrzeug mit einem vorbekannten Lenksystem mit festen Lenkprogrammen muß nun beispielsweise um von der normalen Längsfahrt quer an eine Übergabestation anzudocken eine Reihe von einzelnen Schritten vorgenommen werden. Zunächst muß das Fahrzeug in Längsfahrt vor der Einfahrt zur Andockstation angehalten werden. Nach Stillstand des Fahrzeuges wird dann das Lenkprogramm für die Querfahrt gewählt. Anschließend muß man warten, bis die gelenkten Achsen entsprechend den Steuerbefehlen umgeschwenkt wurden. Anschließend wird in Querfahrt die Übergabestation angefahren. Falls beim Anfahren der Übergabestation Korrekturen notwendig sind, muß das Lenkprogramm möglicherweise erneut gewechselt werden. Dies ist ein vergleichsweise aufwendiges und unkomfortables Lenksystem.

Aus DE 201 07 719 U1 ist deshalb ein Lenksystem mit einem weiteren Steuerelement bekannt, über welches die Räder der Vorder- oder der Hinterachse manuell aus der von dem gewählten Lenkprogramm vorgegebenen Stellung gedreht werden können. Aus NL 1 015 678 C2 ist ebenfalls ein zusätzliches Steuerelement bekannt, über welches eine manuelle Über- oder Untersteuerung der von dem gewählten Lenkprogramm vorgegebenen Stellung möglich ist. Hierbei besteht aber weiterhin das Problem, dass zwischen den einzelnen Lenkprogrammen gewechselt werden muss und das zusätzliche Steuerelement lediglich zur Korrektur der gewählten Lenkprogramme dient. Hierdurch ist die Bedienung aber weiterhin aufwendig und unkomfortabel.

Aufgabe der vorliegenden Erfindung ist es daher, ein Mehrradlenksystem für Radfahrzeuge zu schaffen, das möglichst flexibel verfahrbar sein soll.

Erfindungsgemäß wird diese Aufgabe durch die Kombination der Merkmale des Anspruchs 1 gelöst. Demnach wird hier ein Lenksystem für Fahrzeuge mit mehreren gelenkten Rädern geschaffen, bei dem neben einem Lenksollwertgeber für die Räder, beispielsweise einem Lenkrad, zusätzlich ein Bedienelement zur kontinuierlichen Verschiebung der Lenklinie und einem Bedienelement zur kontinuierlichen Steuerung der Hauptrichtung des Fahrzeugs vorgesehen ist. Durch diese Merkmalskombination wird eine intuitive Lenkung geschaffen, die vollständig auf fest definierte Lenkprogramme verzichtet. Mit der entsprechenden kontinuierlich einstellbaren Sollwertvorgabe wird eine höhere Flexibilität des Lenksystems erreicht.

Der Vorteil der intuitiven Lenkung liegt im fließenden Übergang zwischen den Bewegungsrichtungen und Bewegungsformen des Fahrzeuges. Lenkprogrammwechsel, die die Bedienung kompliziert machen und die Abläufe verlangsamen, sind nicht notwendig. Bei festen Lenkprogrammen ist üblicherweise ein erfahrener Fahrer einzusetzen, um das jeweilig beste Lenkprogramm für die aktuelle Situation wählen zu können. Bei der intuitiven Lenkung gemäß der vorliegenden Erfindung führt der Fahrer nun die gewünschte Bewegung des Fahrzeugs mit den Bedienelementen während der Fahrt aus, wobei das Fahrzeug dieser jeweiligen Bewegungsvorgabe unmittelbar folgt. Hierdurch kann nach kurzer Eingewöhnungszeit des Fahrers das Fahrzeug sicher lenken, da der Fahrer die Bedienelemente gefühlsmäßig richtig benutzt. Er kann bei einer falschen Richtung des Fahrzeugs parallel über Lenksollwertgeber, Bedienelement zur kontinuierlichen Verschiebung der Lenklinie und dem Bedienelement zur kontinuierlichen Steuerung der Hauptrichtung des Fahrzeugs das Fahrzeug intuitiv richtig lenken. Ein umständliches Rangieren bzw. ein aufwendiges Umstellen der Lenkprogramme im Stillstand des Fahrzeuges ist nicht mehr notwendig. Insbesondere entfällt das Abreiben der Radoberflächen gegenüber dem Untergrund während der Lenkung im Stillstand, da mittels des erfindungsgemäßen Lenksystems üblicherweise während der Fahrt gelenkt wird.

Um nun mit dem Lenksystem nach der Erfindung aus einer Längsfahrt an eine Übergabestation anzudocken ist folgender Ablauf notwendig. Das Fahrzeug fährt längs in Richtung zur Übergabestation. Sobald die Einfahrt zur Übergabestation erreicht ist, wird die Hauptrichtung des Fahrzeuges auf die Übergabestation hin eingestellt, die Hauptrichtung mag hier ungefähr der Querrichtung entsprechen. Bei diesem Umstellvorgang muß das Fahrzeug nicht angehalten werden, da mittels des Bedienelements zur kontinuierlichen Steuerung der Hauptrichtung diese Hauptrichtung kontinuierlich während der Fahrt umgestellt werden kann. Daraufhin bewegt sich nun das Fahrzeug in Richtung zur Übergabestation. Während der Annäherung an die Übergabestation kann die Orientierung des Fahrzeugs nun aber auch einfach mittels des Lenksollwertgebers, also beispielsweise mittels eines Lenkrads und den im Bedienelement zur kontinuierlichen Verschiebung der Lenklinie so beeinflußt werden, dass zum exakten Anfahren einer bestimmten Position an der Übergabestation keine weitere Korrektur notwendig ist.

Besonders vorteilhafte Ausgestaltungen der Erfindung ergeben sich aus den sich an den Hauptanspruch anschließenden Unteransprüchen.

Demnach kann der Lenksollwertgeber, wie an sich im Stand der Technik schon bekannt, ein Lenkrad, ein Joystick, ein Drehwinkelgeber (z. B. Potentiometer, Hallgeber, etc.) oder ein Encoder sein.

Das Bedienelement zur Verschiebung der Lenklinie kann vorteilhaft ein Joystick, ein Schieberegler (z. B. Schiebepoti, Lineargeber,etc.), ein Kippschalter oder eine Wipptaste sein. Beim Kippschalter sind allerdings nur vorbestimmte Lenklinien einstellbar.

Das Bedienelement zur Steuerung der Hauptrichtung des Fahrzeuges kann aus einem drehbaren Element bestehen, dessen Stellung über einen Drehwinkelgeber bestimmbar ist. Für bestimmte Fahrtrichtungen können hier vorteilhaft Raststellungen für den Winkelgeber vorgegeben sein. Hier kann es sich beispielsweise um eine Geradeausfahrt, eine 90°-Querfahrt in die eine Richtung oder eine - 90°-Querfahrt in die entgegengesetzte Richtung handeln. Alternativ kann das Bedienelement auch aus einem Joystick bestehen, der in der gewählten Richtung verbleibt und dessen Stellung durch eine Meßeinrichtung aufgenommen wird.

Das Bedienelement zur Verschiebung der Lenklinie und das Bedienelement zur Steuerung der Hauptrichtung können ganz besonders vorteilhaft in einem einzigen Bedienelement zusammengefaßt sein. Damit kann der Fahrer des Fahrzeugs später mit einer Hand leicht einerseits die Lenklinie kontinuierlich verschieben und gleichzeitig die Hauptrichtung ansteuern.

Gemäß einer Ausführungsvariante der Erfindung können die Steuerbefehle des Lenksollwertgebers, des Bedienelements zur Verschiebung der Lenklinie und des Bedienelements zur Steuerung der Hauptrichtung des Fahrzeuges je einer Steuereinheit zugeführt werden, die die Ansteuerbefehle für die die Lenkeinrichtungen der Räder ermittelt und an die Lenkeinrichtungen weiterleitet.

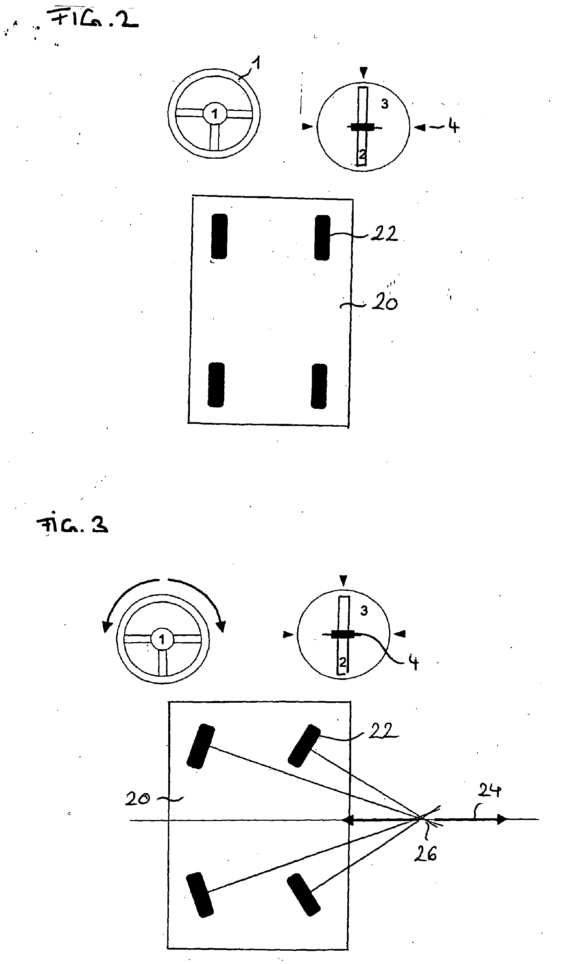

Weitere Merkmale, Einzelheiten und Vorteile der Erfindung ergeben sich aus einem in der Zeichnung dargestellten Ausführungsbeispiel. Es zeigen die Figuren 2 bis 8 ein einfaches Ausführungsbeispiel in schematischer Darstellung, wobei hier jeweils die unterschiedlichen Lenkmöglichkeiten des Lenksystems erläutert werden.

Die Figur 2 zeigt schematisch das Fahrzeug 20 mit vier mittels hier nicht näher dargestellter Lenkeinrichtungen separat lenkbaren Rädern 22. Hier kann jede beliebige Anzahl von Rädern 22 im Rahmen der Erfindung mit dem erfindungsgemäßen Lenksystem gelenkt werden. Die erfindungsgemäße intuitive Lenkung wird mittels dreier Bedienelemente gesteuert. Es handelt sich hier einerseits um den Lenksollwertgeber 1 in Form eines Lenkrades. Neben diesem ist ein Bedienelement zur Verschiebung der Lenklinie 2 in Form eines Schiebe-Potentiometers gezeigt. Dieser ist in einer drehbaren Scheibe 3 montiert, die das Bedienelement zur kontinuierlichen Steuerung der Hauptrichtung des Fahrzeuges ist. Diese drehbare Montageplatte weist einen absolut messenden Winkelgeber (in der Zeichnung nicht dargestellt) auf, der die Stellung dieser Vorrichtung erfaßt. Hier im Einzelnen nicht dargestellt aber durch die Pfeile 4 angedeutet sind Raststellungen vorhanden, die die Vorwahl der Grundeinstellung bei O° also der Fahrt längs geradeaus, bei +90°, also der Fahrt quer geradeaus nach rechts und -90°, also der Fahrt Richtung quer geradeaus nach links entspricht. Die jeweilige Funktionsweise der einzelnen Bedienelemente wird anhand der folgenden Figuren erläutert.

In der Darstellung gemäß Figur 3 wird mittels des Lenkrads 1 die Kurvenfahrt des Fahrzeuges 20 vorgegeben. Solange die Bedienelemente 3 und 4 in ihrer Nullstellung verbleiben, ergibt sich eine Allradlenkung, die eine Lenklinie 24 in der Mitte des Fahrzeugs 20 aufweist. Mittels des Lenkrads 1 kann im Gegensatz zu einer Veränderung der anderen Bedienelemente die Orientierung des Fahrzeuges verändert werden, das heißt das Fahrzeug kann gedreht werden. Eine Drehung des Lenkrads verschiebt den Lenkpol 26 auf der Lenklinie und erzeugt eine Kurvenfahrt mit dem aktuellen Lenkpol als Mittelpunkt der Kurve. Alle gelenkten Achsen der jeweils einzeln lenkbaren Räder werden auf diesen Lenkpol 26 hin ausgerichtet. Bei der Geradeausstellung des Lenkrads ist der Lenkpol unendlich weit vom Fahrzeug entfernt. Mit zunehmendem Lenkeinschlag nähert sich der Lenkpol immer weiter, je nach Lenkrichtung von rechts oder links dem Fahrzeug an.

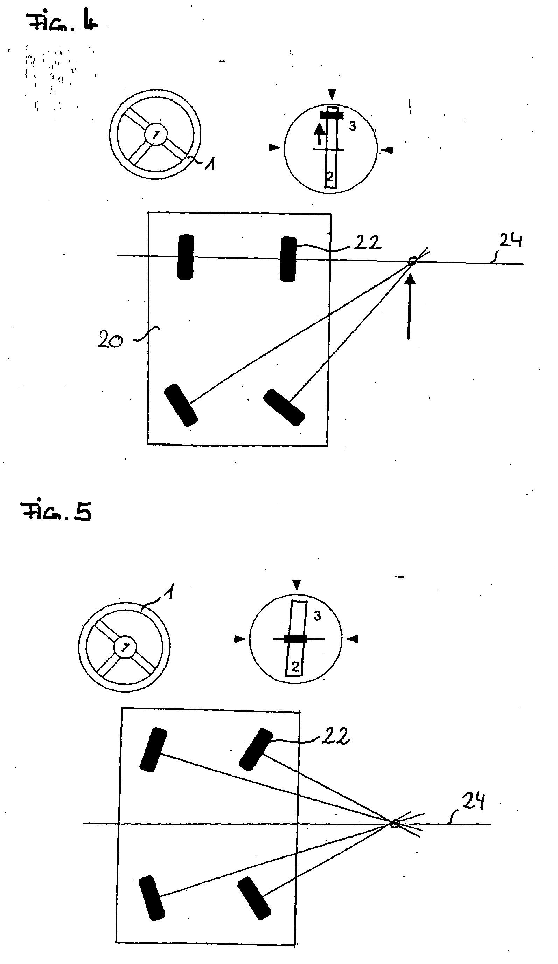

In Figur 4 werden das Lenkrad 1 und das Bedienelement zur kontinuierlichen Verschiebung der Lenklinie 2 verändert, wobei die Lenklinienverschiebung die Lenkgeometrie des Fahrzeugs beeinflußt, indem die Lenklinie 24 der Lenkung vor- und zurückverschoben werden kann, wobei die Verschiebung gemäß der vorliegenden Erfindung über die Einstellung des Bedienelementes 2 stufenlos erfolgt. Wird die Lenklinie 24 nun nach vorne verschoben, wie dies in der Figur 4 gezeigt ist, so wird der Einfluß der Vorderräder auf die Lenkung immer geringer. Bei maximaler Verschiebung nach vorne, also dem Grenzwert, der in der Figur 4 exakt dargestellt ist, sind die Vorderräder starr. Mit dieser Einstellung läßt sich das Fahrzeug z. B. gut vorwärts und in einen schmalen Gang einfahren oder stabil mit hoher Geschwindigkeit rückwärts fahren.

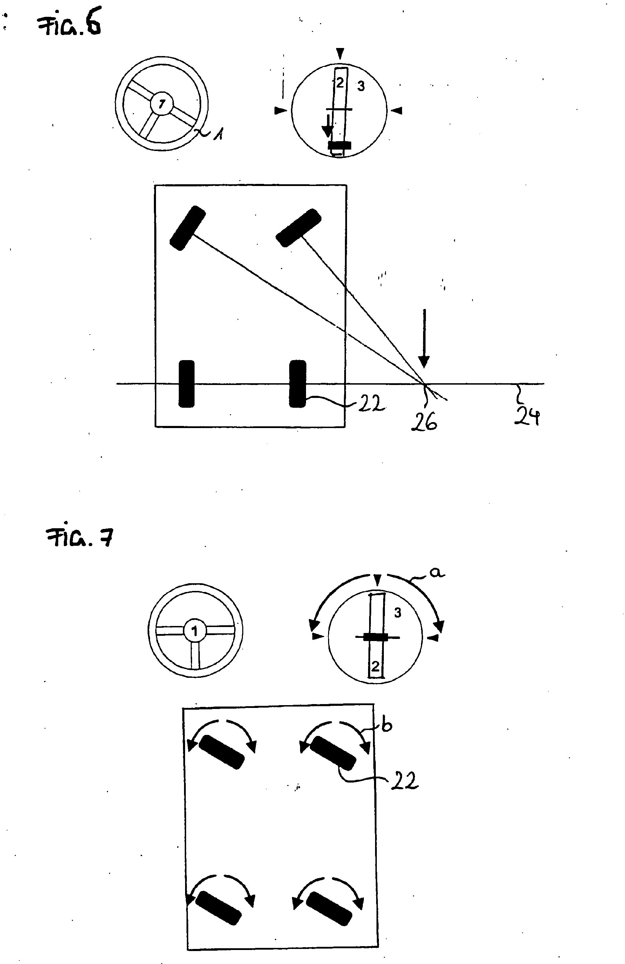

Befindet sich die Lenklinie in Neutralstellung, wie nochmals in der Figur 5 gezeigt, so ergibt sich eine Allradlenkung, bei der die Lenkwinkel der Vorder- und Hinterräder symmetrisch sind. Bei dieser Einstellung wird der kleinste Kurvenradius und somit die größte Wendigkeit erreicht. In der Einstellung gemäß Figur 5 ist das Bedienelement zur Steuerung der Hauptrichtung 3 ebenfalls noch in Neutralstellung. Wird nun mittels des Bedienelementes zur kontinuierlichen Verschiebung der Lenklinie 2 die Lenklinie nach hinten verschoben, so wird der Einfluß der Hinterräder auf die Lenkung immer geringer. Bei maximaler Verschiebung nach hinten, wie sie in Figur 6 dargestellt ist, sind die Hinterräder starr. In dieser Einstellung läßt sich das Fahrzeug stabil mit hoher Geschwindigkeit entsprechend einem PKW vorwärts fahren und rückwärts gut in eine enge Gasse einfahren.

Anhand der Figur 7 kann nun die Steuerung der Hauptrichtung näher erläutert werden. Zur Steuerung der Hauptrichtung dient das Bedienelement zur kontinuierlichen Steuerung der Hauptrichtung 3. Die Einstellbarkeit dieser drehbaren Platte ist mit dem Doppelpfeil a gezeigt. Die jeweilige Stellung der Platte 3, wie sie vom Fahrer eingestellt wird, ist über einen hier nicht näher dargestellten absolutmessenden Winkelgeber erfaßbar, wie bereits einleitend beschrieben wurde. Diese einstellbare Hauptrichtung wird bei den lenkbaren Rädern 22 eingestellt, wie dies anhand der Doppelpfeile b unmittelbar im Bereich der Räder 22 in Figur 7 eingezeichnet ist.

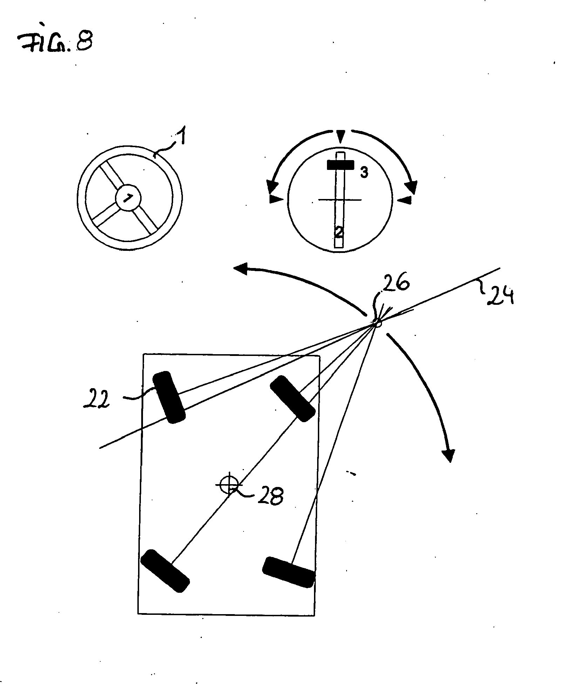

Die Figur 8 zeigt nun beispielhaft den Einsatz sämtlicher drei Bedienelemente, das heißt des Lenkrades 1, des Bedienelementes zur kontinuierlichen Verschiebung der Lenklinie 2 und des Bedienelements zur kontinuierlichen Steuerung der Hauptrichtung des Fahrzeuges 3. Die Verstellung der Hauptrichtung entspricht hier einer Drehung der Lenklinie 24 inklusive des Lenkpols 26 um die Fahrzeugmitte 28.

## Patentansprüche

1. Lenksystem für Fahrzeug (20) mit mindestens drei unabhängig voneinander lenkbaren Rädern (22) und einem die Räder (22) mittels eines wählbaren Lenkprogramms lenkenden Lenksollwertgeber (1), beispielsweise einem Lenkrad, wobei ein Lenkpol (26), auf welchen die Achsen der Räder (22) bei einer Kurvenfahrt ausgerichtet sind, durch Betätigung des Lenksollwertgebers entlang einer Lenklinie (24) verschoben wird,
**dadurch gekennzeichnet, dass**
neben dem Lenksollwertgeber (1) ein Bedienelement (2) zur kontinuierlichen Verschiebung der Lenklinie (24) und ein Bedienelement (3) zur kontinuierlichen Steuerung der Hauptrichtung des Fahrzeugs (20) vorgesehen ist.

2. Lenksystem nach Anspruch 1, **dadurch gekennzeichnet, dass** der Lenksollwertgeber (1) ein Lenkrad, ein Joystick, ein Drehwinkelgeber oder ein Encoder ist.

3. Lenksystem nach Anspruch 1 oder 2, **dadurch gekennzeichnet, dass** das Bedienelement (2) zur Verschiebung der Lenklinie ein Joystick, Schieberegler, Kippschalter oder eine Wipptaste ist.

4. Lenksystem nach einem der Ansprüche 1-3, **dadurch gekennzeichnet, dass** das Bedienelement (3) zur Steuerung der Hauptrichtung des Fahrzeugs aus einem drehbaren Element besteht, dessen Stellung über einen Drehwinkelgeber bestimmbar ist.

5. Lenksystem nach Anspruch 4, **dadurch gekennzeichnet, dass** für bestimmte Fahrrichtungen Raststellungen für den Winkelgeber vorgesehen sind.

6. Lenksystem nach einem der vorangehenden Ansprüche, **dadurch gekennzeichnet, daß** das Bedienelement (2) zur Verschiebung der Lenklinie und das Bedienelement (3) zur Steuerung der Hauptrichtung in einem Bedienelement zusammengefaßt sind.

7. Lenksystem nach einem der Ansprüche 1-3, **dadurch gekennzeichnet, dass** das Bedienelement (3) zur Steuerung der Hauptrichtung des Fahrzeugs aus einem Joystick besteht, der in der gewählten Richtung verbleibt und dessen Stellung über eine Meßeinrichtung bestimmbar ist.

8. Lenksystem nach einem der vorgenannten Ansprüche, daß die Steuerbefehle des Lenksollwertgebers (1), des Bedienelementes (2) zur Verschiebung der Lenklinie und des Bedienelementes (3) zur Steuerung der Hauptrichtung des Fahrzeuges je einer Steuereinheit zugeführt werden, die die Ansteuerbefehle für die Lenkeinrichtungen der Räder (22) ermittelt und an die Lenkeinrichtungen weiterleitet.

## Claims

1. Steering system for a vehicle (20) having at least three wheels (22), which can be steered independently of one another, and a steering setpoint value signal generator (1), which can steer the wheels (22) by means of a selectable steering program, for example a steering wheel, wherein a steering pole (26) on which the axes of the wheels (22) are oriented during cornering is displaced along a steering line (24) by activating the steering setpoint value generator,
**characterized in that**
in addition to the steering setpoint value signal generator (1) an operator control element (2) is provided for continuously displacing the steering line (24), and an operator control element (3) is provided for continuously controlling the main direction of the vehicle (20).

2. Steering system according to Claim 1, **characterized in that** the steering setpoint value signal generator (1) is a steering wheel, a joystick, a rotational angle signal transmitter or an encoder.

3. Steering system according to Claim 1 or 2, **characterized in that** the operator control element (2) for displacing the steering line is a joystick, shift controller, toggle switch or a rocker key.

4. Steering system according to one of Claims 1-3, **characterized in that** the operator control element (3) for controlling the main direction of the vehicle is composed of a rotatable element whose position can be determined by means of a rotational angle transmitter.

5. Steering system according to Claim 4, **characterized in that** latched positions for the angle signal transmitter are provided for certain directions of travel.

6. Steering system according to one of the preceding claims, **characterized in that** the operator control element (2) for displacing the steering line and the operator control element (3) for controlling the main direction are combined in one operator control element.

7. Steering system according to one of Claims 1-3, **characterized in that** the operator control element (3) for controlling the main direction of the vehicle is composed of a joystick which remains in the selected direction and whose position can be determined by means of a measuring device.

8. Steering system according to one of the abovementioned claims, **characterized in that** the control instructions of the steering setpoint value signal generator (1), of the operator control element (2) for displacing the steering line and of the operator control element (3) for controlling the main direction of the vehicle are each fed to a control unit which determines the actuation instructions for the steering devices of the wheels (22) and passes them on to the steering devices.

## Revendications

1. Système de direction pour véhicule (20) avec au moins trois roues (22) apte à être dirigées indépendamment les unes des autres et un transmetteur de valeur théorique de braquage (1), tel qu'un volant de direction, qui dirige une des roues (22) au moyen d'un programme de braquage sélectionnable, sachant qu'un pôle de direction (26), vers lequel sont dirigés les essieux des roues (22) pendant un trajet à virages, est déplacé le long d'une ligne de direction (24) par l'actionnement du transmetteur de valeur théorique de braquage,
**caractérisé en ce que**, outre le transmetteur de valeur théorique de braquage (1), il est prévu un élément de commande (2) pour le déplacement continu de la ligne de direction (24) et un élément de commande (3) pour la commande continue de la direction principale du véhicule (20).

2. Système de direction selon la revendication 1, **caractérisé en ce que** le transmetteur de valeur théorique de braquage (1) est un volant de direction, un joystick, un transmetteur d'angle de braquage ou un encodeur.

3. Système de direction selon la revendication 1 ou 2, **caractérisé en ce que** l'élément de commande (2) pour le déplacement de la ligne de direction est un joystick, un régulateur à coulisse, un interrupteur à levier ou une touche à bascule.

4. Système de direction selon l'une quelconque des revendications 1 à 3, **caractérisé en ce que** l'élément de commande (3) pour la commande de la direction principale du véhicule est formé par un élément rotatif, dont la position peut être déterminée par un capteur d'angle de rotation.

5. Système de direction selon la revendication 4, **caractérisé en ce que** pour différentes directions du véhicule, il est prévu des positions de blocage pour le capteur d'angle.

6. Système de direction selon l'une quelconque des revendications précédentes, **caractérisé en ce que** l'élément de commande (2) pour le déplacement de la ligne de direction et l'élément de commande (3) pour la commande de la direction principale sont regroupés dans un élément de commande.

7. Système de direction selon l'une quelconque des revendications 1 à 3, **caractérisé en ce que** l'élément de commande (3) pour la commande de la direction principale du véhicule est formé par un joystick, qui reste dans la position sélectionnée et dont la position peut être déterminée par un dispositif de mesure.

8. Système de direction selon l'une quelconque des revendications précédentes, **caractérisé en ce que** les instructions de commande du transmetteur de valeur théorique de braquage (1), de l'élément de commande (2) pour le déplacement de la ligne de direction et de l'élément de commande (3) pour la commande de la direction principale du véhicule sont acheminées respectivement vers une unité de commande, qui détermine les instructions de commande pour les dispositifs de direction des roues (22) et les transmet aux dispositifs de direction.
